# EUROPEAN PATENT SPECIFICATION

(11) **EP 2 169 926 B1**
(45) Date of publication and mention of the grant of the patent: **03.01.2018**
(21) Application number: 08016727.3
(22) Date of filing: 23.09.2008
(51) Int. Cl.: H04M 1/725, G06F 3/0481, G06F 3/0485, H04M 1/2745

(54) **Method and apparatus for providing access to data items**
Verfahren und Vorrichtung zur Bereitstellung des Zugriffs auf Datenelemente
Procédé et appareil pour fournir un accès à des articles de données

(43) Date of publication of application: 31.03.2010
(73) Proprietor: Vodafone Holding GmbH, 40213 Düsseldorf (DE)
(72) Inventor: Velick, Deborah, 40233 Düsseldorf (DE)
(74) Representative: Jostarndt Patentanwalts-AG

(56) References cited:
- EP-A- 1 962 175
- EP-A1- 1 873 702
- WO-A-2005/043373
- US-A- 5 819 032
- US-A1- 2002 140 698
- US-B1- 6 414 677
- ANONYMOUS: "Dynamic icons for information visualization" RESEARCH DISCLOSURE, MASON PUBLICATIONS, HAMPSHIRE, GB, vol. 328, no. 25, 1 August 1991 (1991-08-01), XP007116708 ISSN: 0374-4353

## Description

The present invention is related to a method and an apparatus for providing access to data items.

### Background of the invention

Communication generally becomes more and more important today. Especially communication with modern digital communication devices such as personal digital assistants (PDA), portable computers, mobile telephones, palm top computers etc. is of increasing importance. Sometimes these devices are also equipped with a camera and a microphone for taking pictures as well as for recording video and audio data. The features and capabilities of the devices lead to an increasing number of data files that may be exchanged between different devices and users by wireless or wired networks. As an example, a mobile telephone is no longer limited to receive and make voice calls but it may take photographs, receive e-mails and SMS-messages and voice messages. A variety of different kinds of communication increases the number of communication items significantly. This number of communication items is increased even more because one and the same communication items of the above mentioned types is frequently copied to a plurality of recipients. In addition to that, the communication devices store contact information of every individual with whom any kind of communication has taken place. This type of information is referred to as contacts. The contacts form part of the communication items. Technically speaking all communication items are data items. Because of the shear quantity it becomes consequently more and more difficult for individuals to organize their communication items. Some of these communication items contain valuable data for the user and the prudent user will therefore make backups of the data stored on his mobile device.

E.g. this can be done through appropriate software running on a computer to synchronise the computer with the mobile device. However, in reality some users do not pay the necessary attention to this aspect. In consequence, they loose valuable data if their mobile communication device gets lost or destroyed. Under this aspect it is quite advantageous if the data items of the user are not only stored on his mobile communication device but also on a server of a network provider.

In this case the user does not have to take any action to make a backup storage of his communication items and contacts. If his mobile communication device gets lost or destroyed all his communication items which were stored on his mobile communication device can be recovered from the backup copy stored on the server of the network provider.

At the same time this concept enables the user to work on the communication items not only through his mobile device but also through other alternative devices which are allowed to have contact to the personal files of the user on the server. Such an alternative device could be a computer with internet access allowing the user to contact the files which are stored on the server of the network provider. WO 2005/043373 A1 discloses a system for organizing communication items (e.g. SMS emails, photos ...) on a network device. Icons representing message files are arranged on a spiral time axis. Icons vary in size, with the more recent files being larger and being positioned towards the outside of the spiral, thereby creating a 3D perspective effect. Navigation means to scroll along the time axis are provided.

US 2002/140698 A1 discloses a system and method for navigating, searching and inspecting within a 3D environment. The method includes "speed-coupled flying", wherein the position of a virtual camera is elevated during navigation in order to provide the user with a better overview of the 3D scene. Previously hidden and obstructed objects become visible.

EP 1962175 A1 discloses a three-dimensional image display device wherein images belonging to the same image group are presented in a perspective stack arrangement. Labels containing information related to the topmost image are displayed.

EP 1873702 A1 discloses an information processing apparatus including a 3D (three dimensional)-matrix arranging portion and a luminance/transmittance display controller portion. When a plurality of contents are list-displayed, the 3D-matrix arranging portion arranges the plurality of contents in a 3D-matrix-like form in accordance with predetermined three axes. The 3D matrix includes a plurality of planes each containing a group of contents of the plurality of contents. The luminance/transmittance display controller portion displays on a display portion the respective groups of contents of the plurality of contents arranged in the 3D matrix, in a manner that luminance is gradually reduced in a direction from contents on a front-most plane on the plurality of planes to contents on a rear-most plane, and the transmittance is gradually increased in the direction from the contents of the front-most plane to the contents on the rear-most plane.

The publication "Dynamic icons for information visualization", Research Disclosure, Mason Publication, Hampshire, GB, vol. 328, no. 25 (1991) discloses a technique for creating and maintaining icons of dynamically varying size and features in order to overcome deficiencies.

Taking this as a starting point there is a need for technologies providing users with an efficient access to data items related to communication contents and contacts.

### Summary of the invention

The present invention proposes the concept of providing a user with an efficient access to data items.

According to a first aspect, the invention proposes a method as defined in appended independent claim 1. According to a second aspect, the present invention proposes a system as defined in appended independent claim 7.

Advantageous embodiments are defined in the dependent claims. Further examples are provided for facilitating the understanding of the invention. Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### Brief description of the drawings

In the accompanying drawing exemplary embodiments of the present invention are shown. It shows:
- Figure 1: a schematic illustration of a communication environment;
- Figure 2: a schematic illustration of the structure of a screen of an application of the present invention;
- Figure 3: a portion of figure 2 in greater detail;
- Figures 4a, 4b: a schematic illustration of incoming content displayed on the screen;
- Figures 5a, 5b: visualisation of the content in a 2-dimensional viewing mode on the screen;
- Figures 6a, 6b: visualisation of the content in a 3-dimensional viewing mode on the screen;
- Figures 7a, 7b: visualizes a scaling effect in the time domain in one type of representation of the icons on the screen.

### Detailed description of embodiments of the invention

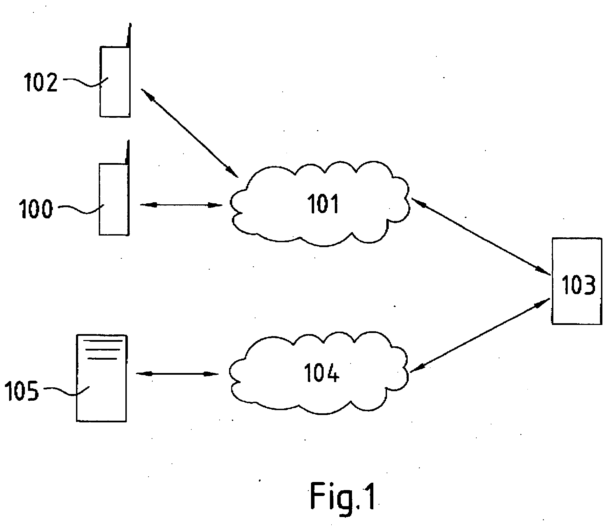

Figure 1 schematically depicts a communication environment. A mobile communication device 100, such as, a mobile phone, a PDA or the like is connected to a wireless public land mobile network (PLMN). The PLMN 101 is a wireless telecommunication network according to GSM standard or according to the UTMS standard for example. The user of the communication device 100 can set up a connection to another communication device 102 through the network 101. The communication devices 100 and 102 are only representative examples of a large plurality of communication devices. The network 101 is also connected with a server 103 of the network provider. Among other functionalities the server stores communication items, i.e. data files, of the users of the network 101.

Additionally, the server 103 is connected to a second communication network 104 such as the internet. Figure 1 shows also another communication device 105 such as a computer which is also connected to the network 104.

In an embodiment of the invention it is assumed that the computer 105 belongs to the user of the communication device 100. The computer 105 enables this user by means of appropriate software including access control features to access his communication items stored on the server 103. The access control can be based on codes and/or smart cards. This concept enables a user to work on communication items stored on the server 103 in a more convenient way because the computer 105 usually has a bigger screen and a more comfortable keyboard than a mobile communication device. The structure of the computer 105 is conventional and is not described here for the sake of conciseness.

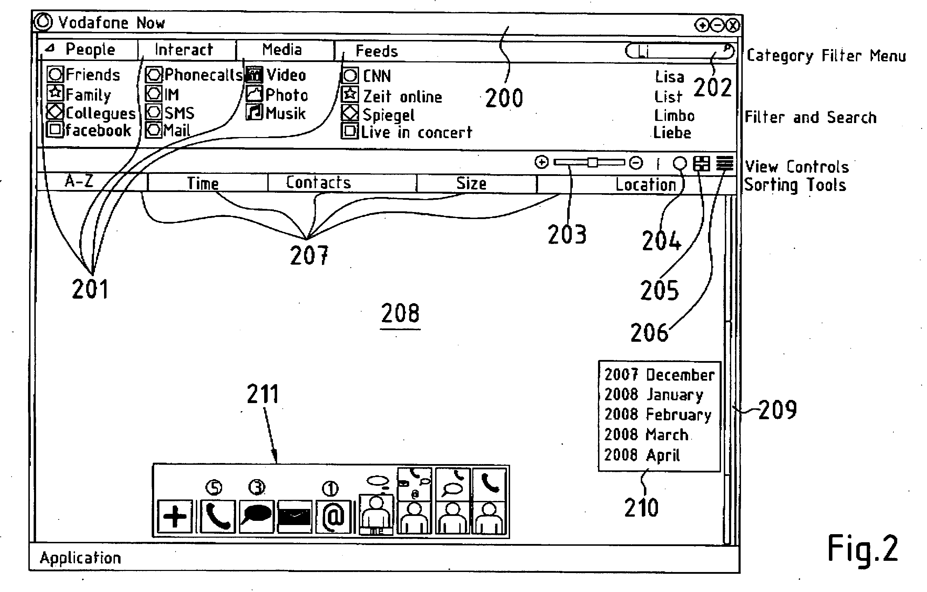

Figure 2 shows the structure of a display 200 of an application running on the computer 105. The computer 105 is not shown in Figure 2.

The top of the screen 200 provides the user with a category filter menu 201 allowing him to select between people, interaction, media, and feeds, such as are RSS-feeds. At the same time the user may search for certain keywords in a search window 202 and corresponding search results are displayed instantaneously below the search window 202. Below the category filter menu 201 there are icons enabling the user to select certain filters such as friends, family, colleagues and face book in the category of people. The category of interaction is structured according to different types of communication such as phone calls, instant messaging (IM), SMS-messages, and e-mails. The category of media provides a selection among video, photo, and music. The category of feeds is e.g. online services of news companies. Below the filter and search menu there are some input elements 203 to 206 allowing the user to control the view on the screen. The input elements 203 to 206 form a view control for the screen. Input element 203 is a horizontal slider which will be explained later in connection with other functionalities. With input element 204 a user selects to display all communication items in a 2-dimensional view on the screen as will be explained in more detail further below in the description. Input element 205 initiates a grid view of items and input element 206 a line view. These functionalities will be explained further below. Just below the view control there are sorting tools 207 provided allowing a user to sort items on the screen according to the alphabet from a to z, according to time, contacts, size and location. This function is only visible in the grid and in a list view of the communication items. The biggest portion of the display 200 is covered by the content area 208 where icons representing the content are displayed. On the right hand side of the contact area there is a scroll bar 209 allowing the user to scroll through the communication items which will be explained later. The length of the scroll bar indicates the length of the time span. In one embodiment the user is informed about the time span by a label 210 which is faded in. Finally, below the content area 208 there is a menu bar 211 providing contextual options and a notification area.

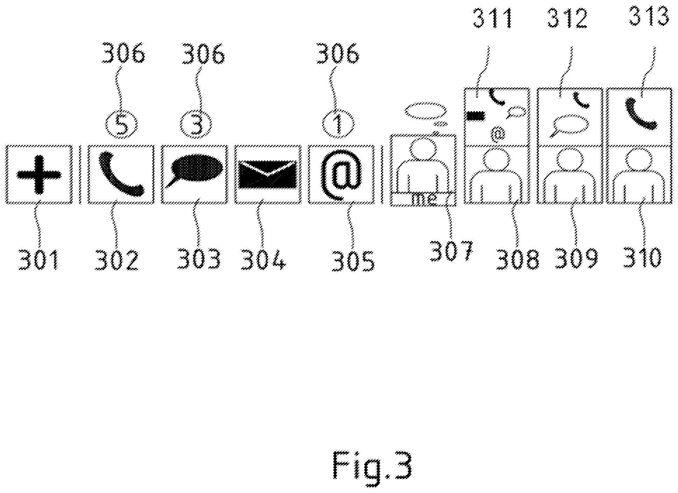

In figure 3 the menu bar and notification area 211 is shown in greater detail. There is an icon 301 which is a general option to add a new communication. Icons 302 to 305 provide different communication options. The icon 302 is for setting up a phone call, icon 303 is related to IM-messages, icon 304 is also related to IM-messages and icon 305 to emails. On top of the icons 302 to 305 there are indicators 306 indicating the number of missed events in the related content area. In the situation shown in figure 3 the user has missed five telephone calls; he has three unread IM-messages and one unopened email.

Next to the communication items 302 to 305 there is one shortcut icon 307 displaying the details of the user upon actuation of the icon 307. Finally, there are on the right hand side of the menu bar 209 three icons 308 to 310 which are related to windows of ongoing communication. On top of those icons 308 to 310 open communication channels are symbolised by associated symbols inside icons 311 to 313. Each of the icons 311 to 313 provide a shortcut directly to the respective communication window in which one or several communication channels are open. The symbols representing the open communication channels correspond to the symbols which are used for the corresponding communication icons 302 to 305. The symbols are shown inside the icons 311 to 313.

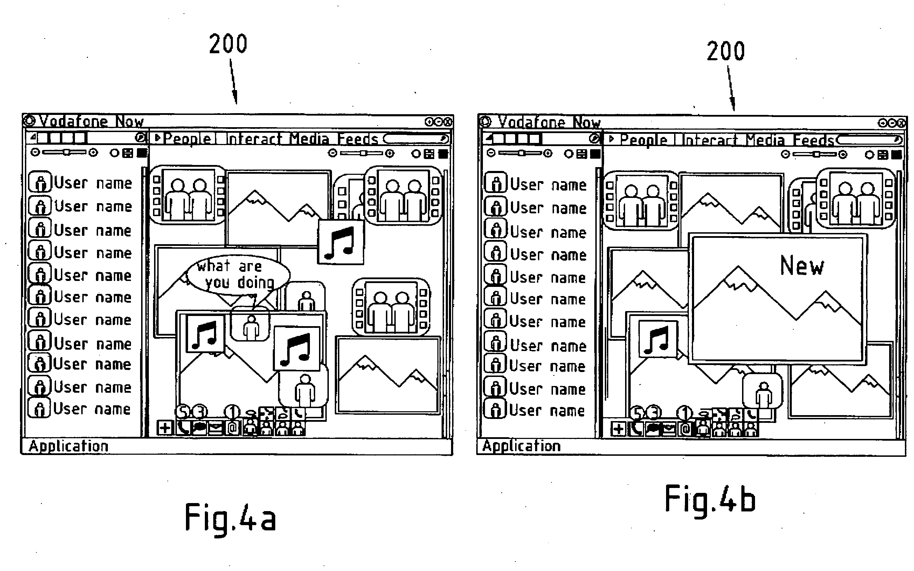

Figures 4a and 4b show one embodiment of the present invention utilized to provide a convenient access to communication items.

In figure 4a a schematic view on the screen 200 of a computer which is connected with the server of the network provider. On the display 200 all communication items are displayed on the right hand side of the content area 208 of the screen while on the left hand side of the content area 208 (figure 2) there is a column of items displaying the user names of individuals the present user has contact by receiving a communication item from these individuals or sending one to them. If the user is not interacting, all items displayed on the right hand side of the display 200 appear flat. This situation is shown in figure 4a. The display of items is managed in such a way that the newest item appears always on top of all the other items in a reasonable size to view, as it is shown in figure 4b. The item labelled "new" is on top of all other items displayed on the display 200. In an embodiment of the present invention the size of items varies as a function of the importance of the sender. For example a photo of one of the favourite contacts of the user is displayed bigger than photos from other senders who do not belong to the favourite contacts of the user. In the 2-dimensional presentation of the communication items as shown in figure 4a the user may choose between grid view and a list view of the communication items by clicking on the icon 205 (figure 205) to trigger the grid view and by clicking on icon 206 (figure 2) to trigger the list view. When switching the view the same communication items are visible as in the previous one while the size of the displayed items is resized depending on the room required in the different viewing modes on the display.

Going back to the collage type 2-dimensional presentation shown in figure 4a the user may navigate through the 2-dimensional presentation of the communication items by clicking on a particular item. Clicking on an item that is behind other items brings the item to the front and makes the covering items disappear. Older items appear behind the selected item as it is shown in figure 4a. Even though the item is now not covered anymore there is always a more recent item on the display visible to allow the user to travel back towards now. By clicking on items which have been received at different points in time the user shifts the presentation shown on the screen 200 along a timeline. The concept can be visualized by a collage which is continuously growing thicker by placing new photos or images on already received elements. In this image the timeline corresponds to the thickness of the collage and the moment of now corresponds to the surface of the collage. In the 2-dimensional viewing mode the horizontal slider 203 mentioned in figure 2 enables the user to increase or decrease the size of the content items. If the horizontal slider 203 on the top right is moved to the left or right it decreases or increases the size of the content items. Through this, the visual subset of items also increases or decreases i.e. the number of items displayed on the screen is adapted to the size of the items. The maximum zooming level is achieved if only a single item is visible at the time.

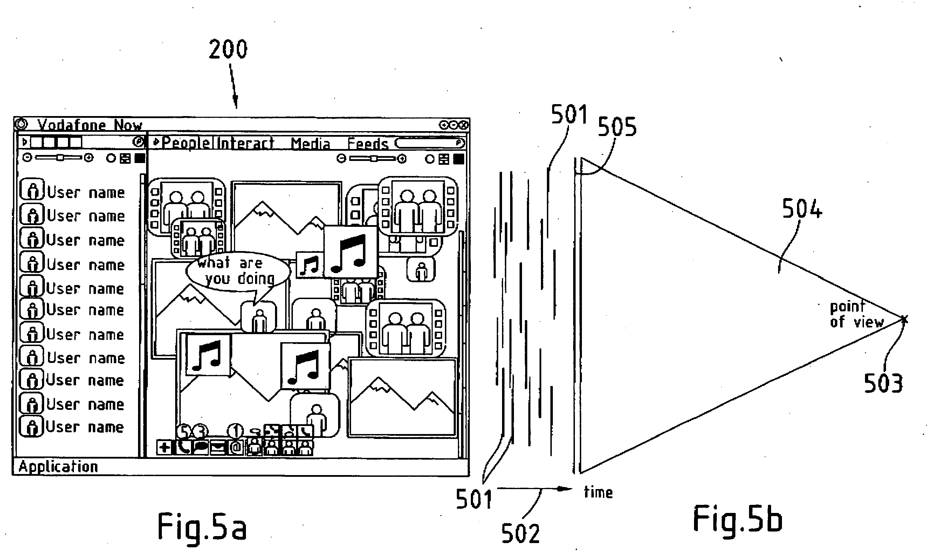

In figure 5a the 2-dimensional viewing mode is illustrated in which incoming items are always placed on top of already received items to create the collage type of presentation already described in figures 4a and 4b. In figure 5b the same situation as shown in figure 5a is illustrated in a schematic way in which communication items are represented by short lines 501. Time progresses in figure 5b from left to right as indicated by arrow 502. In this sense figure 5b is a side view of figure 5a. The point of view of the user is indicated at reference number 503. The viewing area is indicated by a triangle 504. In the 2-dimensional viewing mode the very condensed z-axis and the missing perspective creates a collage like presentation of the content. The focus of the presentation is to show incoming items in a prominent way without putting to much emphasis on the time aspect. The view focuses on the moment of now, the older items will be covered by new items. This kind of presentation is advantageous if the user waits for a certain input or wishes to react quickly when he receives certain communication items e.g. from customers or clients. However, in other situations it may be more desirable to put more emphasis on the time aspect, such as the user is interested to get a quick overview while he was absent. In the following the terms "viewing mode" and "presentation" shall have an equivalent meaning.

The moment of now is indicated by a vertical line 505. The distance between the line 505 and an individual short line 501 is related to the time which has elapsed since the communication item presented by the individual line 501 and the moment of now has elapsed.

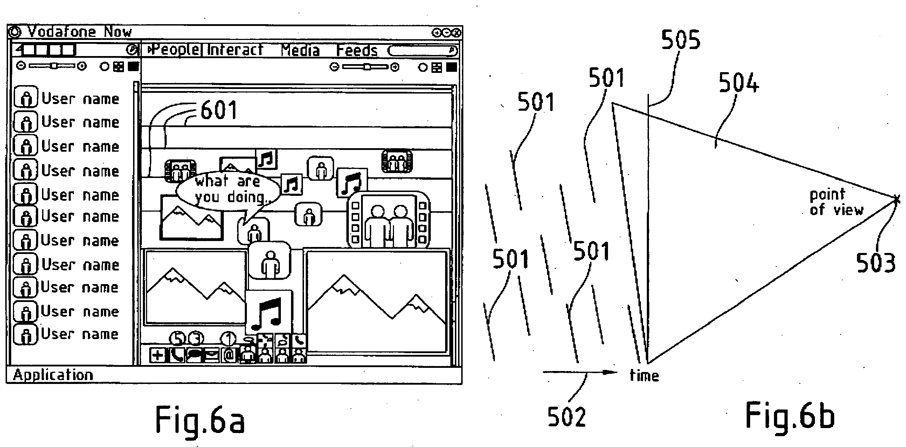

As soon as the user starts to navigate in time by using the scrollbar on the right on the content area 208 (figure 2) or the mouse of the computer wheel the view angles and the items are arranged according to the time of their appearance. A grid 601 displaying the time frame fades in as it is shown in figure 6a. In the new view shown in figure 6a the same items are visible as in the previous one shown in figure 5a as well as some additional items that might have been covered in the 2-dimensional presentation of figure 5a. In the 3-dimensional presentation of figure 6a older items appear to be further away in the background of the presentation and are shown smaller compared to more recent items. As soon as the user clicks onto an item which is further away in the background, the grid 601 representing the time moves to the back. By clicking on items at different positions on the timeline the user may travel back and forth along the timeline. The functionality of travelling along the timeline is the same in the 2-dimensional and 3-dimensional view though the presentation of the communication items on the display 200 is different. If the user is no longer interacting with the mouse wheel or the scroll bar the 3-dimensional view automatically switches back to the 2-dimensional view shown in figure 5a. That means if the user is not interacting with the application, the view automatically switches back to the 2-dimensional viewing mode after a pre-determined period of time.

In the quasi 3-dimensional viewing mode the focus of the presentation is on the time. The extended z-axis represents the time and the perspective creates a 3-dimensional effect. The view puts more emphasis on the time aspect through showing a large time frame. Older items are smaller, therefore there is less overlapping between the items. New items are big in front, old items are small in the back.

Similarly as in figure 5b the different viewing mode is schematically illustrated in figure 6b. The change of the viewing mode is equivalent to raise the viewing point 503 of the user so he now looks not straight forward onto the items but rather from a higher level allowing him to see older items in a smaller size in the background.

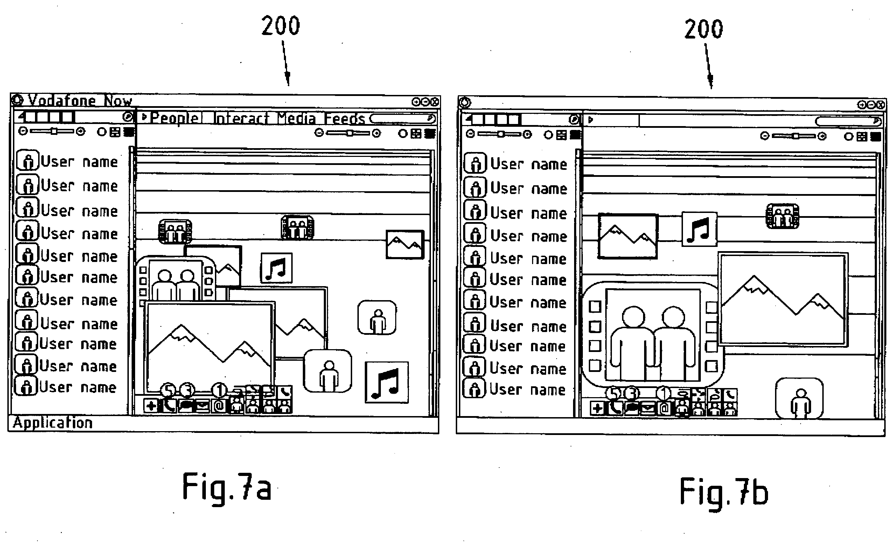

Navigation through the items by the user is realized in the same way as in the 2-dimensional view as it is explained in the following with reference to figures 7a and 7b. If the user clicks on an item, all items are rearranged such that the clicked item is in the front of the screen. In this way the user may travel forward or backward in time by clicking on items which are in the foreground or in the background of the presentation on the display. As it has been mentioned above it is always necessary to display one item which has been received after the item onto which the user has clicked to allow the user to travel forward in time.

Alternatively the user may scroll through time by using the scrolling element 209 (figure 2) on the right hand side of the content area 208 (figure 2). When starting to scroll with using the scroll bar or the mouse wheel, the time grid comes to the foreground and labels 801 showing the displayed timeframe fade in. Moving the scroll bar up brings the items in the back forward corresponding to travelling backward in time because incoming new items are always placed in front of the display. Moving the scroll bar down achieves the opposite result.

A movement of the slider 203 (figure 2) to the left results in a reduced time frame on the screen while a movement of the slider 203 to the right results in an increase of the time frame. I.e. is a shorter period of time is displayed this functionality is illustrated in figures 7a and 7b, wherein in figure 7a the displayed time period is longer than in figure 7b. Consequently, also more communication items are displayed in figure 7a than in figure 7b.

### List of reference numerals:

100,102 communication device
101 network
103 server
104 network
105 communication device
200 screen
201 category filter menu
202 search window
203 input element; horizontal slider
204 input element; user selects one item to be displayed on the full screen
205 input element; initiates a grid view of items
206 input element; initiates a line view
207 sorting tools
208 content area
209 scrolling element
210 label
211 menu bar
301 icon; general option to add a new icon to the menu bar
302 icon; setting up a phone call
303 icon; related to sms messages
304 icon; related to e-mails
305 icon; related to internet feeds
306 indicators
307 to 313 icon
501 short lines
502 time line
503 point of view
504 triangle

## Claims

1. Method for providing access to data items to a user by means of a communication device (105) provided with a display (200), the method comprising the following steps:
- generating one icon (501) each data item, wherein each data item is a received communication item;
- controlling the display (200) such that, in a 2-dimensional viewing mode, an icon of a newly received data item is shown on the display in a foreground of a 2-dimensional presentation of a plurality of icons (501) of already received data items, wherein the icons in the 2-dimensional presentation are arranged along a condensed z-axis (502) representing a time of reception of the data items and are presented to the user with missing perspective;
- detecting a predetermined user interaction indicating a navigation of the user along the z-axis;
the method being **characterized by** further comprising the step of:
- controlling the display (200) upon detection of the predetermined user interaction to switch to a 3-dimensional viewing mode and create a perspective graphical presentation of the icons (501) on the display (200) by extending the z-axis 2. (502) and raising the view point (503) of the user, thus allowing the user to be able to see older icons, where older icons appear to be further away in the background of the presentation and are shown smaller compared to more recent icons.

2. Method according to Claim 1, wherein the method further comprises the step of clicking on one of the plurality of displayed icons to bring this icon into the foreground of the presentation on the display (200).

3. Method according to Claim 2, wherein the method further comprises the step of keeping always another icon in the presentation on the display (200) which is more recent than the one the user has clicked on.

4. Method according to Claim 1, wherein the method further comprises the step of switching back automatically to the 2-dimensional viewing mode after a predetermined period of time has elapsed without any further user interaction.

5. Method according to Claim 1, wherein the method further comprises the step of moving the displayed icons along the z-axis (502) in response to the movement of a scrolling element operated by the user.

6. Method according to Claim 5, wherein the method further comprises the step of fading in labels associated with an icon coming to the foreground of the presentation in response to a user initiated scrolling of the perspective graphical presentation along the z-axis (502); and fading out the labels if the user continues to scroll to another icon.

7. System arranged for providing access to data items to a user, wherein the system comprises a communication device (105) provided with a display (200), wherein the communication device (105) is arranged to generate one icon (501) for each data item, wherein each data item is a received communication item; and the display (200) is controlled such that, in a 2-dimensional viewing mode, the icon of a newly received data item is shown in a foreground of a 2-dimensional presentation of a plurality of icons (501) of already received data items on the display, wherein the icons in the 2-dimensional presentation are arranged along a condensed z-axis (502) and are presented to the user with missing perspective;
and wherein the communication device (105) is arranged to detect a predetermined user interaction indicating a navigation of the user along the z-axis;
the system being **characterized in that**
the display (200) is controlled upon detection of the predetermined user interaction to switch to a 3-dimensional viewing mode and create a perspective graphical presentation of the icons (501) on the display (200) by extending the z-axis (502) and raising the view point (503) of the user, thus allowing the user to be able to see older icons, where older icons appear to be further away in the background of the presentation and are shown smaller compared to more recent icons.

8. System according to claim 7, wherein the display (200) is arranged to switch back automatically to the 2-dimensional viewing mode after a predetermined period of time has elapsed without any further user interaction.

9. System according to claim 7 or 8, wherein the display (200) is arranged to move the displayed icons along the z-axis in response to a movement of a scrolling element operated by the user.

10. System according to any of claims 7 to 9, wherein the system comprises a server (103), a mobile device (100), and a computer, wherein the computer is the communication device (105) provided with the display (200), and a communication network (101, 104) for connecting them, wherein on the server (103) the data files are stored which are the communication items of the user, and wherein the computer is arranged to provide the user access to his communication items stored on the server (103) by displaying the icons (501).

## Patentansprüche

1. Verfahren zum Bereitstellen eines Zugriffs auf Datenelemente für einen Nutzer mittels einer Kommunikationsvorrichtung (105), die mit einer Anzeige (200) versehen ist, wobei das Verfahren die folgenden Schritte umfasst:
- Erzeugen eines Icons (501) für jedes Datenelement, wobei jedes Datenelement ein empfangenes Kommunikationselement ist;
- Steuern der Anzeige (200) in der Weise, dass in einer 2-dimensionalen Betrachtungsbetriebsart auf der Anzeige ein Icon eines neu empfangenen Datenelements in einem Vordergrund einer 2-dimensionalen Darstellung mehrerer Icons (501) bereits empfangener Datenelemente angezeigt wird, wobei die Icons in der 2-dimensionalen Darstellung entlang einer komprimierten z-Achse (502) angeordnet sind, die eine Zeit des Empfangs der Datenelemente darstellt, und dem Nutzer mit fehlender Perspektive dargestellt werden;
- Detektieren einer vorgegebenen Nutzerinteraktion, die eine Navigation des Nutzers entlang der z-Achse angibt;
wobei das Verfahren **dadurch gekennzeichnet, dass** es ferner den folgenden Schritt umfasst:
- Steuern der Anzeige (200) bei Detektion der vorgegebenen Nutzerinteraktion, um in eine 3-dimensionale Betrachtungsbetriebsart zu schalten und durch Dehnen der z-Achse (502) und Anheben des Betrachtungspunkts (503) des Nutzers auf der Anzeige (200) eine perspektivische graphische Darstellung der Icons (501) zu erzeugen, und somit Ermöglichen, dass der Nutzer ältere Icons sehen kann, wobei ältere Icons im Vergleich zu jüngeren Icons im Hintergrund der Darstellung weiter entfernt erscheinen und kleiner gezeigt sind.

2. Verfahren nach Anspruch 1, wobei das Verfahren ferner den Schritt des Anklickens eines von mehreren angezeigten Icons, um dieses Icon auf der Anzeige (200) in den Vordergrund der Darstellung zu bringen, umfasst.

3. Verfahren nach Anspruch 2, wobei das Verfahren ferner den Schritt umfasst, dass immer ein weiteres Icon, das jünger als das ist, das der Nutzer angeklickt hat, in der Darstellung auf der Anzeige (200) gehalten wird.

4. Verfahren nach Anspruch 1, wobei das Verfahren ferner den Schritt des automatischen Zurückschaltens in die 2-dimensionale Betrachtungsbetriebsart, nachdem eine vorgegebene Zeitdauer ohne weitere Nutzerinteraktion verstrichen ist, umfasst.

5. Verfahren nach Anspruch 1, wobei das Verfahren ferner den Schritt des Bewegens der angezeigten Icons entlang der z-Achse (502) in Ansprechen auf die Bewegung eines durch den Nutzer betätigten Scrollelements umfasst.

6. Verfahren nach Anspruch 5, wobei das Verfahren ferner den Schritt des Einblendens von Beschriftungen, die einem in den Vordergrund der Darstellung kommenden Icon zugeordnet sind, in Ansprechen darauf, dass ein Nutzer das Scrollen der jeweiligen graphischen Darstellung entlang der z-Achse (502) initiiert hat; und
das Ausblenden der Beschriftungen, falls der Nutzer zu einem anderen Icon weiterscrollt, umfasst.

7. System, das dafür ausgelegt ist, für einen Nutzer Zugriff auf Datenelemente bereitzustellen, wobei das System eine Kommunikationsvorrichtung (105) umfasst, die mit einer Anzeige (200) versehen ist, wobei die Kommunikationsvorrichtung (105) dafür ausgelegt ist, für jedes Datenelement ein Icon (501) zu erzeugen, wobei jedes Datenelement ein empfangenes Kommunikationselement ist; und
wobei die Anzeige (200) in der Weise gesteuert wird, dass das Icon eines neu empfangenen Datenelements in einer 2-dimensionalen Betrachtungsbetriebsart auf der Anzeige in einem Vordergrund einer 2-dimensionalen Darstellung mehrerer Icons (501) bereits empfangener Datenelemente gezeigt wird, wobei die Icons in der 2-dimensionalen Darstellung entlang einer komprimierten z-Achse (502) angeordnet sind und dem Nutzer mit fehlender Perspektive dargestellt werden;
und wobei die Kommunikationsvorrichtung (105) dafür ausgelegt ist, eine vorgegebene Nutzerinteraktion, die eine Navigation des Nutzers entlang der z-Achse angibt, zu detektieren;
wobei das System **dadurch gekennzeichnet ist, dass**
die Anzeige (200) bei Detektion der vorgegebenen Nutzerinteraktion zum Schalten in eine 3-dimensionale Betrachtungsbetriebsart und zum Erzeugen einer perspektivischen graphischen Darstellung der Icons (501) auf der Anzeige (200) durch Dehnen der z-Achse (502) und Erhöhen des Betrachtungspunkts (503) des Nutzers gesteuert wird, sodass ermöglicht wird, dass der Nutzer ältere Icons sehen kann, wobei ältere Icons im Vergleich zu jüngeren Icons im Hintergrund der Darstellung weiter entfernt zu sein scheinen und kleiner gezeigt sind.

8. System nach Anspruch 7, wobei die Anzeige (200) zum automatischen Zurückschalten in die 2-dimensionale Betrachtungsbetriebsart, nachdem eine vorgegebene Zeitdauer ohne weitere Nutzerinteraktion verstrichen ist, ausgelegt ist.

9. System nach Anspruch 7 oder 8, wobei die Anzeige (200) dafür ausgelegt ist, die angezeigten Icons in Ansprechen auf eine Bewegung eines durch den Nutzer betätigten Scrollelements entlang der z-Achse zu bewegen.

10. System nach einem der Ansprüche 7 bis 9, wobei das System einen Server (103), eine Mobilvorrichtung (100) und einen Computer umfasst, wobei der Computer die Kommunikationsvorrichtung (105) ist, die mit der Anzeige (200) versehen ist, und mit einem Kommunikationsnetz (101, 104), um sie zu verbinden, wobei auf dem Server (103) die Datendateien gespeichert sind, die die Kommunikationselemente des Nutzers sind,
und wobei der Computer dafür ausgelegt ist, für den Nutzer durch Anzeigen der Icons (501) Zugriff auf seine in dem Server (103) gespeicherten Kommunikationselemente bereitzustellen.

## Revendications

1. Procédé de fourniture d'accès à des éléments de données à un utilisateur au moyen d'un dispositif de communication (105) pourvu d'un affichage (200), le procédé comprenant les étapes suivantes :
- générer une icône (501) pour chaque élément de données, dans lequel chaque élément de données est un élément de communication reçu ;
- commander l'affichage (200) de sorte que, dans un mode de visualisation bidimensionnel, une icône d'un élément de données récemment reçu est affichée sur l'affichage dans un avant-plan d'une présentation bidimensionnelle d'une pluralité d'icônes (501) d'éléments de données déjà reçus, dans lequel les icônes dans la présentation bidimensionnelle sont agencées le long d'un axe z condensé (502) représentant une heure de réception des éléments de données et sont présentées à l'utilisateur avec la perspective manquante ;
- détecter une interaction d'utilisateur prédéterminée indiquant une navigation de l'utilisateur le long de l'axe z ;
le procédé étant **caractérisé par** le fait de comprendre en outre l'étape consistant à :
- commander l'affichage (200) lors de la détection de l'interaction d'utilisateur prédéterminée de passer à un mode de visualisation tridimensionnel et créer une présentation graphique en perspective des icônes (501) sur l'affichage (200) en prolongeant l'axe z (502) et élevant le point de vue (503) de l'utilisateur, permettant ainsi à l'utilisateur d'être capable de voir des icônes plus anciennes, où des icônes plus anciennes semblent être plus loin dans l'arrière-plan de la présentation et sont affichées en plus petit par rapport à des icônes plus récentes.

2. Procédé selon la revendication 1, dans lequel le procédé comprend en outre l'étape consistant à cliquer sur une de la pluralité d'icônes affichées pour amener cette icône dans l'avant-plan de la présentation sur l'affichage (200).

3. Procédé selon la revendication 2, dans lequel le procédé comprend en outre l'étape consistant à toujours conserver une autre icône dans la présentation sur l'affichage (200) qui est plus récente que celle sur laquelle l'utilisateur a cliqué.

4. Procédé selon la revendication 1, dans lequel le procédé comprend en outre l'étape consistant à repasser automatiquement au mode de visualisation bidimensionnel après qu'une période de temps prédéterminée s'est écoulée sans aucune autre interaction d'utilisateur.

5. Procédé selon la revendication 1, dans lequel le procédé comprend en outre l'étape consistant à déplacer les icônes affichées le long de l'axe z (502) en réponse au mouvement d'un élément de défilement opéré par l'utilisateur.

6. Procédé selon la revendication 5, dans lequel le procédé comprend en outre l'étape consistant à ouvrir en fondu des étiquettes associées à une icône venant vers l'avant-plan de la présentation en réponse à un défilement initié par l'utilisateur de la présentation graphique en perspective le long de l'axe z (502) ; et fermer en fondu les étiquettes si l'utilisateur continue de défiler vers une autre icône.

7. Système agencé pour fournir un accès à des éléments de données à un utilisateur, dans lequel le système comprend un dispositif de communication (105) pourvu d'un affichage (200), dans lequel le dispositif de communication (105) est agencé pour générer une icône (501) pour chaque élément de données, dans lequel chaque élément de données est un élément de communication reçu ; et
l'affichage (200) est commandé de sorte que, dans un mode de visualisation bidimensionnel, l'icône d'un élément de données récemment reçu est affichée dans un avant-plan d'une présentation bidimensionnelle d'une pluralité d'icônes (501) d'éléments de données déjà reçus sur l'affichage, dans lequel les icônes dans la présentation bidimensionnelle sont agencées le long d'un axe z condensé (502) et sont présentées à l'utilisateur avec la perspective manquante ;
et dans lequel le dispositif de communication (105) est agencé pour détecter une interaction d'utilisateur prédéterminée indiquant une navigation de l'utilisateur le long de l'axe z ;
le système étant **caractérisé en ce que**
l'affichage (200) est commandé lors de la détection de l'interaction d'utilisateur prédéterminée de passer à un mode de visualisation tridimensionnel et créer une présentation graphique en perspective des icônes (501) sur l'affichage (200) en prolongeant l'axe z (502) et élevant le point de vue (503) de l'utilisateur, permettant ainsi à l'utilisateur d'être capable de voir des icônes plus anciennes, où des icônes plus anciennes semblent être plus loin dans l'arrière-plan de la présentation et sont affichées en plus petit par rapport à des icônes plus récentes.

8. Système selon la revendication 7, dans lequel l'affichage (200) est agencé pour repasser automatiquement au mode de visualisation bidimensionnel après qu'une période de temps prédéterminée s'est écoulée sans aucune autre interaction d'utilisateur.

9. Système selon la revendication 7 ou 8, dans lequel l'affichage (200) est agencé pour déplacer les icônes affichées le long de l'axe z en réponse à un mouvement d'un élément de défilement opéré par l'utilisateur.

10. Système selon l'une quelconque des revendications 7 à 9, dans lequel le système comprend un serveur (103), un dispositif mobile (100) et un ordinateur, dans lequel l'ordinateur est le dispositif de communication (105) pourvu de l'affichage (200), et un réseau de communication (101, 104) pour les connecter, dans lequel les fichiers de données qui sont les éléments de communication de l'utilisateur sont stockés sur le serveur (103) et dans lequel l'ordinateur est agencé pour fournir à l'utilisateur un accès à ses éléments de communication stockés sur le serveur (103) en affichant les icônes (501).
